# EUROPEAN PATENT APPLICATION

(11) **EP 1 443 423 A1**
(43) Date of publication of application: **04.08.2004**
(21) Application number: 03001786.7
(22) Date of filing: 28.01.2003
(51) Int. Cl.: G06F 17/30

(54) **Apparatus and method for data replication in a data network**

(71) Applicant: Bombardier Transportation (Technology) Germany GmbH, 13627 Berlin (DE)
(72) Inventor: Paquette, Jules, LaPocatiere, Quebec GOR 1ZO (CA); Gagnon, Martin, Beloeil, Quebec J3G 3A9 (CA); Boone, Marc, 8310 Sant Kruis (BE); Candeale, Dirk, 8500 Kortrijk (BE)
(74) Representative: Owen, David Philip (GB)

(57) **Abstract**

A data management system for sharing data between remote sites of a data network. A data storage medium is located at each site, operative to store first and second data collections. The data management system includes a primary data replication module, a replication control mechanism and a secondary data replication module. The primary data replication module replicates data from at least a portion of the first data collection of each data storage medium to the same first portion of the first data collection of predetermined ones of the other data storage media. The replication control mechanism includes a data structure that is stored in the first data collection of each data storage medium, whereby data from the data structure is replicated by the primary data replication module from each data storage media to the respective predetermined other data storage media. This data structure contains data representative of modifications made to the second data collection of each data storage medium. The secondary data replication module replicates data from the second data collection of each data storage medium to the second data collection of at least a subset of the other data storage media on the basis of the contents of the data structure.

## Description

### Cross-Reference to Related Applications

The present application is a continuation-in-part of US Patent Application No. 10/282,256, filed on October 29, 2002, which is based on US Provisional Patent Application No. 60/330,718, filed on October 29, 2001.

### Field of the Invention

The present invention generally relates to the field of data sharing in a multi-site environment. More specifically, the invention relates to an apparatus and method for sharing data between multiple, remote sites of a data network.

### Background of the Invention

Common to many large business organizations, such as multi-national corporations and international industrial groups, is a worldwide distribution of work activities. More specifically, enterprises engaging in such activities as design, development, manufacturing and/or marketing may regroup several remote facilities, located in different countries around the world. Integration of these remote facilities involves the deployment of large communication networks, such as Wide Area Networks (WANs), which interconnect the various facilities for inter-communication and resource sharing purposes.

When remote facilities of an enterprise contribute to a shared activity or project, such as the design of a new product, various challenges arise that must be met by the communication network in order to ensure a cohesive, efficient and effective method of work. These challenges include project and time management, cost control, quality control as well as system throughput, all of which become more difficult to manage when multiple, remote work sites are involved. An important factor contributing to all of these challenges is the capability of the communication network for data sharing between the remote work sites.

Data sharing is necessary in order for each work site to be able to contribute to the common project, and for the project to evolve to completion with a concurrent development process between all work sites. However, the implementation of data sharing between remote work sites is itself associated with several challenges, such as coordinating access to the shared data and maintaining data integrity within the network.

One simple solution to the implementation of data sharing among multiple, remote work sites is the use of a single, central system for all of the remote work sites. More specifically, all work sites connect over a WAN to a single installation on a central server, where all work sites access the same data. Such a solution avoids any site-specific differences and ensures data integrity for all users; however, the installation involves large data transfers for any user working from a distant site and the response time is totally dependent on the capacity of the WAN interconnecting the various work sites.

Unfortunately, for an international distribution of work sites, for example throughout Europe and North America, adequate network connections between work sites are relatively difficult to maintain. As a consequence, most work site users experience a very slow network response time, as well as the occasional application time-out. Further, such an installation may have a negative impact on all of the network traffic between work sites, including any other application using the WAN, such as mail and finance tools.

Another possible solution to the implementation of data sharing among multiple, remote work sites is the use of similar installations on each work site, and the exchange of shared data over the WAN on a requirement basis. The shared data is stored in files, where file data is generated by combining many project models together in one work session and saving this work session as a specific file. Unfortunately, although it is quite common to exchange data between different, remote installations using file data, the transfer of large files over the WAN between distant work sites is quite time consuming. Further, the initiation of data transfers on a requirement basis has proven to be problematic, and without automation is quite difficult to implement.

Various other solutions derived from the above installations exist for allowing the sharing of data between remote work sites. Unfortunately, these solutions all share certain common weaknesses, notably poor management of multi-site security and a lack of data integrity among the various work sites.

In light of the foregoing, there clearly exists a need in the industry to develop an improved apparatus and method for sharing data in a multi-site environment.

### Summary of the Invention

The present invention addresses the needs that have developed for data sharing in a multi-site environment.

According to a broad aspect, the invention provides a data management system for sharing data between remote sites of a data network. A data storage medium is located at each site, operative to store first and second data collections. The data management system includes a primary data replication module, a replication control mechanism and a secondary data replication module. The primary data replication module replicates data from at least a portion of the first data collection of each data storage medium to the same first portion of the first data collection of predetermined ones of the other data storage media. The replication control mechanism includes a data structure that is stored in the first data collection of each data storage medium, whereby data from the data structure is replicated by the primary data replication module from each data storage media to the respective predetermined other data storage media. This data structure contains data representative of modifications made to the second data collection of each data storage medium. The secondary data replication module replicates data from the second data collection of each data storage medium to the second data collection of at least a subset of the other data storage media on the basis of the contents of the data structure.

For the purposes of this specification, the terms "operative to replicate" and "responsible for replicating" imply both direct data replication by a data transfer operation, as well as indirect data replication by a messaging operation.

Advantageously, the data management system of the present invention allows for data to be shared between remote sites of a data network, while maintaining the integrity of the shared data and reducing the negative effect of such a system on the average response time of the data network.

In a multi-site environment in which remote sites are contributing to a common project, certain information must be shared between the remote sites, where the sharing of this information is carefully managed by a data management system. In a specific, non-limiting example of implementation, the data management system is applied to a data network formed of remote sites A, B, C, D and E, all interconnected by a WAN, where different subsets of the remote sites are involved in the common design of one or more products.

Under the data management system of the present invention, the information shared between the remote sites of the network includes two different types of data. The first type of data consists of metadata, or descriptive data, used to describe and design data objects. The second type of data consists of data objects, such as product model data files, part model data files and specification documents.

The data management system implements a different type of data replication for each of the first and second types of data shared among the remote sites. Furthermore, the data management system includes a replication control mechanism operative to manage the replication of data, particularly data objects, between the remote sites of the network.

At each one of sites A, B, C, D and E is installed a data storage medium that includes first and second information repositories. The first information repository stores the metadata, also referred to as a first data collection, while the second information repository stores the data objects, also referred to as a second data collection. The first and second information repositories are structured and organized in the form of one or more databases.

Metadata is present at each one of sites A, B, C, D and E, stored in the respective data storage medium. This metadata can be divided into first and second metadata portions. The first metadata portion includes part lists, design tools, data management tables and part links, among other possibilities, that must be identically replicated among each of the sites involved in the common design of a product.

The second metadata portion consists of addressing and control data, including pointers, and is local to each site. Thus, there is no replication of the second metadata portion among the remote sites, such that the second metadata portion varies from site to site, even for those sites involved in the common design of a product.

Typically, the second metadata portion of the first data collection stored in a particular data storage medium includes a local pointer table. This local pointer table stores at least one pointer indicative of the address of a location in the particular data storage medium containing specific data of the second data collection, i.e. a specific data object. The pointer is associated with data fields containing control data, where this control data may include an indication of whether or not the specific data has been modified, as well as an indication of the site at which the specific data was modified.

The second data collection, which consists of the actual data objects described by the metadata that are stored in each data storage medium, may differ from one site to another, similar to the second metadata portion. However, in contrast to the second metadata portion, the data objects are replicated between network sites. The replication of data objects from each site to a subset or all of the other sites in the network is determined in accordance with the specific products being developed at the various sites.

Specific to the present invention, the data management system includes two different data replication modules and a replication control mechanism.

The primary data replication module is responsible for replicating the first metadata portion of each site to all or a subset of the other sites. The type of operation performed by the primary data replication module may be referred to as "online replication", and consists of the complete and substantially immediate sharing of the first metadata portion of each data storage medium across predetermined ones of the sites A, B, C, D and E. Thus, for those sites involved in a common design project, the first portion of the first data collection exists at each site as an exact copy of itself.

The secondary data replication module is responsible for replicating data from the second data collection of each data storage medium to the second data collection of all or a subset of the other data storage media. The type of operation performed by the secondary replication module may be referred to as "batch replication", and consists of the selective and delayed sharing of the second data collection among the sites A, B, C, D and E.

As opposed to online replication by the primary replication module, batch replication by the secondary replication module does not necessarily occur immediately following a detected modification to the second data collection of a data storage medium. Rather, batch replication is performed on the basis of a condition of the data network, such as the average response time, and the secondary replication module switches between a passive and an active mode of operation. In the active mode of operation, batch replication operations are performed by the secondary replication module, while in the passive mode of operation, all batch replication operations cease.

The replication control mechanism includes two data structures, preferably a pointer replication table and a data replication table, that allow for the administration of differences in the data shared among the remote sites A, B, C, D and E.

The pointer replication table of the replication control mechanism is a data management table of the first metadata portion stored in each data storage medium. At each site, the pointer replication table of the first metadata portion is dynamically updated to shadow the local pointer table of the second metadata portion, storing the same addressing and control data as the local pointer table, as well as any modifications made thereto. As a part of the first metadata portion, the pointer replication table is identically replicated among all of the remote sites involved in a common design project. Thus, while the contents of the local pointer table of the second metadata portion vary from site to site, the pointer replication table of the first data portion is substantially identical among all of the sites involved in the common design of a product.

In a preferred embodiment, the secondary data replication module is operative to replicate data from the second data collection of each site to the other sites on the basis of the contents of the data replication table.

Data from the second data collection of a particular site is shared with other sites of the network, on the basis of the involvement of each site in the design of a particular product. When data of the second data collection is modified at one of sites A, B, C, D and E, the secondary replication module will detect and store this modification. Over time, the secondary replication module will perform a selective transmission of the detected modification to predetermined ones of the other sites. The modification is transmitted by replicating the modified data from the site at which it was modified to a subset or all of the other sites. The determination of the specific sites to which modified data of the second data collection must be replicated is based on the contents of the data replication table.

The data replication table includes at least one entry for each piece of data from the second data collection that is shared between sites A, B, C, D and E. The data is referenced by an identifier, such as a file name or a pointer address, among other possibilities. For each entry, the data replication table maps the identified data to one of sites A, B, C, D and E, as well as to status information indicative of a current status of the respective data. Examples of this status information include whether or not the associated data has been modified, whether or not the associated data is available for replication and whether or not the associated data has been replicated to the mapped site, among other possibilities.

Thus, the data replication table acts as a queue for maintaining a list of modifications made to data of the second data collection. When the secondary replication module is in the active mode of operation, batch replication operations occur on the basis of this list of modifications.

Similar to the pointer replication table, the data replication table forms a part of the first metadata portion of each data storage medium, such that it is replicated between the sites A, B, C, D and E via the online replication operations performed by the primary data replication module. At each one of sites A, B, C, D and E, when a local user modifies data of the second data collection in the local second database, the corresponding entry in the data replication table is updated to reflect this modification, for later use by the secondary data replication module when it acquires the active mode of operation.

Optionally, the data management system may also include a validator module, operative to ensure that data integrity is maintained within the multi-site network. More specifically, the validator module ensures that specific data of the second data collection can not be accessed and modified simultaneously at two different remote sites of the network.

The validator module performs its validation operation on the basis of validation data stored in both the first and second metadata portions of the first data collection of each data storage medium. For a particular site of the data network, the validator module is capable to determine on the basis of this validation data whether or not specific data in the second data collection is available to a user local to the particular site. The availability of particular data of the second data collection at a particular site may be defined by whether or not the specific data is already in use at another remote site, whether or not the specific data has been modified at another remote site and whether or not the specific data has been updated at the particular site since being modified, among other possibilities.

Under another broad aspect, the present invention provides a method for sharing data between remote sites of a data network.

Under yet another broad aspect, the present invention provides a data structure for managing shared data between multiple, remote sites of a data network.

Other objects of the present invention will be made apparent from the drawings and detailed description that follow.

### Brief Description of the Drawings

The accompanying drawings, which are incorporated in and constitute a part of this specification, illustrate an embodiment of the invention and, together with the description, explain the objects, advantages and principles of the invention. In the drawings:
Fig. 1 illustrates an example of a typical multi-site network environment;
Fig. 2 illustrates a data management system for sharing data in a multi-site environment, according to an example of implementation of the present invention;
Fig. 3 is a functional block diagram of the data management system shown in Fig. 2;
Fig. 4 depicts the functional operation of a primary replication module of the data management system shown in Fig. 2;
Fig. 5 depicts the functional operation of a secondary replication module of the data management system shown in Fig. 2;
Fig. 6 depicts an example of the data replication table of the data management system shown in Fig. 2;
Fig. 7 is a structural block diagram of a server of the data management system shown in Fig. 2;
Figure 8 illustrates an example of the operation of the program element stored in the memory of the server shown in Fig.7, for implementing the data management system shown in Fig. 2; and
Figure 9 illustrates an example of the discrimination table of the data management system shown in Fig. 2.

### Detailed Description

The following detailed description refers to the accompanying drawings that illustrate the embodiments of the present invention. Other embodiments are possible and modifications may be made to the embodiments without departing from the spirit and scope of the invention. Therefore, the following detailed description is not meant to limit the invention. Rather, the scope of the invention is defined by the appended claims.

In a multi-site environment in which remote sites are contributing to a common project, information must be shared between the remote sites. The sharing of this information must be carefully managed and controlled, in order to maintain data integrity within the multi-site environment, as well as to ensure an acceptable network response time.

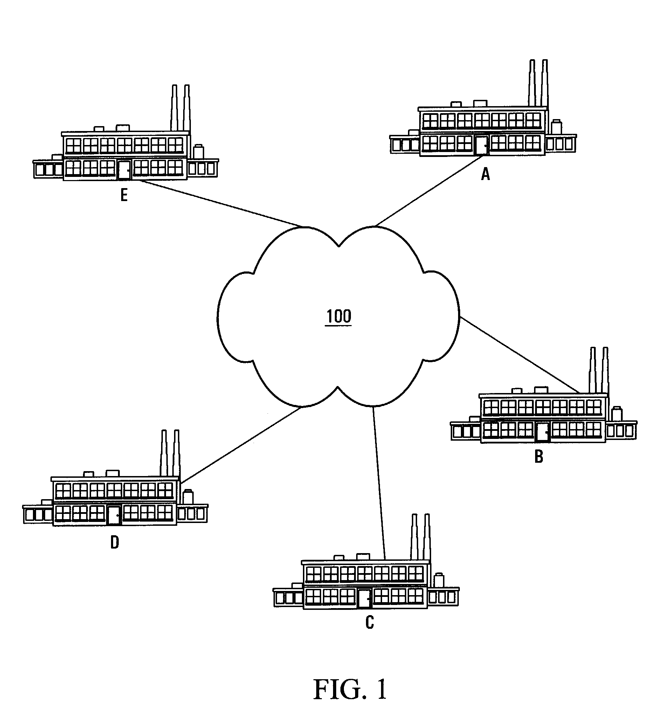

Fig. 1 illustrates an example of a typical multi-site network environment. In this example, several remote facilities A, B, C, D and E of a large, multinational corporation are interconnected by a data network 100. Assuming that facility A is in France, facility B is in England, facility C is in Switzerland, facility D is in Belgium and facility E is in Germany, the data network 100 is a Wide Area Network (WAN), more specifically a communications network distributed over a vast geographic area. The WAN 100 allows the remote facilities A, B, C, D and E to communicate and interact with each other, to share resources and to exchange data, among other possibilities.

Work activities of the multinational corporation are divided among the facilities A, B, C, D and E, and may include, for example, design, development, manufacturing and/or marketing. Typically, although the work activities take place at remote sites around the world, they all focus around one or more services or products provided by the corporation.

For the purposes of illustrating an example of implementation of the present invention, assume hereinafter that the remote facilities A, B, C, D and E are all contributing to a common project, notably the design of a line of new products. More specifically, each of the remote facilities A, B, C, D and E is responsible for contributing to the engineering design of the new products, such that data relating to the design of the new products must be shared between the five facilities.

Although each site of the multi-site environment must be able to contribute to the common project, different sites may be responsible for different sub-projects of this common project. In the example of Figure 1, different facilities may be responsible for the design of different products of the new product line. Assume for the purposes of the following example of implementation of the present invention that facilities A, B and D are responsible for designing new products X and Y, while facilities C and E are responsible for designing new product Z. Thus, users at sites A, B and D must all be able to work on the common design of new products X and Y, while users at sites C and E must all be able to work on the common design of new product Z.

In order to perform the engineering design, a common drawing tool and database interface installation is set up at each of sites A, B, C, D and E. At each site, the installation allows local users to create and link virtual three-dimensional drawings and models, in order to design a virtual model for the new product. In a specific example, the installation is a CATIA/VPM™ installation, where the drawing tool used is CATIA™ (Computer-Aided Three-Dimensional Interactive Application) and the database interface used is VPM™ (Virtual Product Model). Note that different drawing tools, such as POLYCAPP™, as well as different database interfaces could be used without departing from the scope of the present invention.

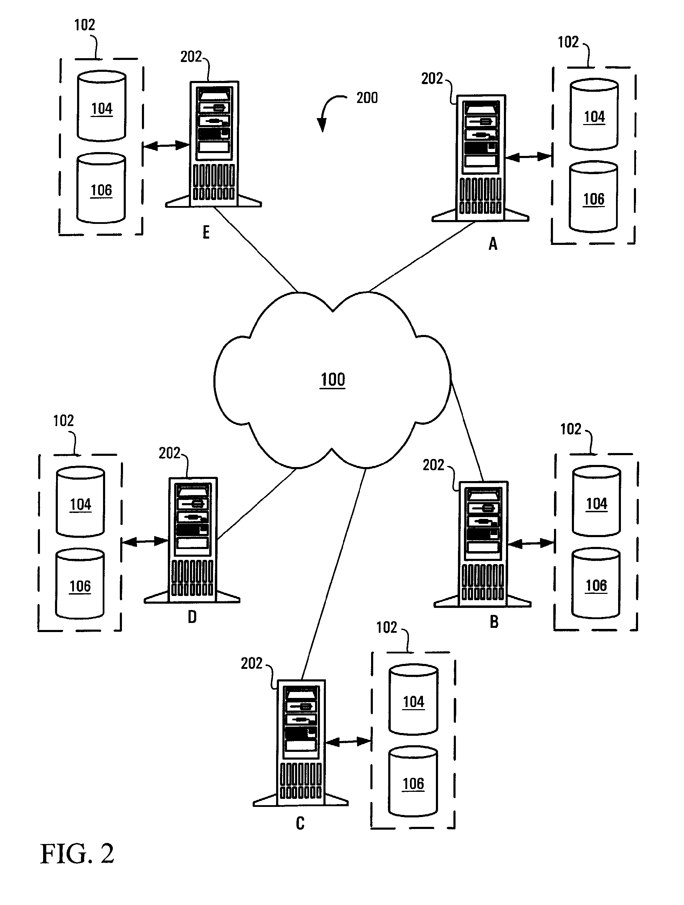

Fig. 2 illustrates a data management system 200 for sharing data in a multi-site environment, according to a non-limiting example of implementation of the present invention. For illustration purposes, the data management system 200 of Fig. 2 is shown applied to the multi-site network environment depicted in Fig. 1, where remote sites A, B, C, D and E are interconnected by the WAN 100.

Note that the multi-site network environment to which the data management system 200 of the present invention is applied may include greater or fewer than five remote sites, without departing from the scope of the invention.

Under the data management system 200, the information shared between the remote sites of the network includes two different types of data. The first type of data consists of metadata, or descriptive data, used to describe and design data objects. The second type of data consists of data objects, such as product model data files, part model data files and specification documents.

The exchange or distribution of metadata between two or more of the remote sites A, B, C, D and E typically constitutes a relatively small data transfer over the WAN 100, such that the network capacity is not overly taxed and a quick response time is possible. In contrast, the exchange or distribution of data objects between two or more remote sites typically constitutes a relatively large data transfer over the WAN 100, that may consume a major portion of the capacity of the network, as well as slow down the network response time.

Specific to the present invention, the data management system 200 implements a different type of data replication for each of the first and second types of data shared among the remote sites. Furthermore, the data management system 200 includes a replication control mechanism operative to manage the replication of data, particularly data objects, between the remote sites of the network 100. Advantageously, these features of the data management system 200 allow for data to be shared between remote sites of a data network, while maintaining the integrity of the shared data and reducing the negative effect of such a system on the average response time of the data network, as will be described in further detail below.

With reference to the example of implementation depicted in Figure 2, at each one of sites A, B, C, D and E is installed a data storage medium 102 that includes first and second information repositories. The first information repository stores the metadata, also referred to as a first data collection, while the second information repository stores the data objects, also referred to as a second data collection. In the example shown in Figure 2, the first and second information repositories are structured and organized in the form of databases 104 and 106, respectively. Alternatively, both information repositories could be implemented by a single database.

The data management system 200 also includes a plurality of local servers 202, each local server 202 being installed at a respective one of sites A, B, C, D and E. The WAN 100 interconnects the local servers 202, for enabling the data management system 200. Thus, users, applications, and resources are distributed between sites A, B, C, D and E, but are linked by the WAN 100, or alternatively by an Internet of networks.

Each one of local servers 202 may be implemented by a computer, a mainframe, a workstation or a combination thereof, among other possibilities. Although not shown in Figure 2, at each site there is also provided a user interface through which a user may access the respective data storage medium 102, and modify the first and second data collections 104, 106. In a specific example, the user interface is implemented by software running on the local server 202, and is transmitted to the user by means of a display, such as the screen of a computer.

In the local servers 202, the basic software is an operating system running on the hardware platform. The platforms and the operating systems of the local servers 202 may differ. As long as the local servers 202 share the same communication exchange protocols and support the same applications, the lower-level differences are irrelevant. It is the communications software that enables local servers 202 to inter-operate. Specific to this example, the communication exchange protocol adopted is an open, non-proprietary protocol, for instance the Internet Protocol (IP), a standard exchange protocol in client-server networking, or any other similar progressive communication exchange protocol.

Metadata is present at each one of sites A, B, C, D and E, stored in database 104 of the respective data storage medium 102. This metadata can be divided into first and second metadata portions. The first metadata portion includes part lists, design tools, data management tables and part links, among other possibilities, that must be identically replicated among each of the sites involved in the common design of a product. Continuing with the above example, it follows that a change in the first metadata portion of any one of sites A, B and D must be identically replicated at the other two of these three sites.

The second metadata portion consists of addressing and control data, including pointers, and is local to each site. Thus, there is no replication of the second metadata portion among the remote sites, such that the second metadata portion varies from site to site, even for those sites involved in the common design of a product.

Typically, the second metadata portion of the first data collection stored in the database 104 of a particular data storage medium 102 includes a local pointer table. This local pointer table stores at least one pointer indicative of the address of a location in the second database 106 of the particular data storage medium 102 containing specific data of the second data collection, i.e. a specific data object. The pointer is associated with data fields containing control data, where this control data may include an indication of whether or not the specific data has been modified, as well as an indication of the site at which the specific data was modified. The purpose of this control data will be discussed in further detail below.

In one example, the pointers of the second metadata portion adopt the URL (Universal Resource Locator) addressing system, allowing to point to a specific file in a directory, such as a local product model data file or part model data file. In one example, both the file and directory exist within the data storage medium 102. Alternatively, the file and directory may exist on any machine within the network 100 and can be served via any of several different methods, such as file location or specific Internet technologies, for example ftp, http, etc. The URL addressing system is well documented and very well known to those skilled in the art, and therefore will not be described in more detail.

Since the local pointer tables are not replicated among the sites, users at a particular site may continue to have access to a local version of a data file even when a modification has been made to the same data file somewhere else in the network. However, the data management system 200 ensures that this access becomes read-only, as will be discussed below.

The second data collection, which consists of the actual data objects described by the metadata that are stored in the database 106 of each data storage medium 102, may differ from one site to another, similar to the second metadata portion. However, in contrast to the second metadata portion, the data objects are replicated between network sites. The replication of data objects from each site to a subset or all of the other sites in the network is determined in accordance with the specific products being developed at the various sites.

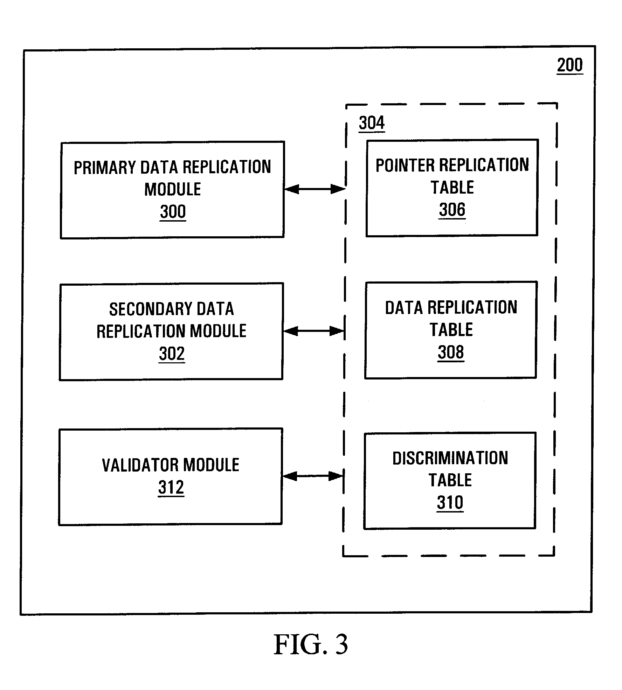

Fig. 3 is a functional block diagram of the data management system 200, which includes two different data replication modules 300, 302 and a replication control mechanism 304. Together, the data replication modules 300, 302 and the replication control mechanism 304 are operative to replicate data between the remote sites A, B, C, D and E, in order to manage the first and second data collections shared by the data storage media 102.

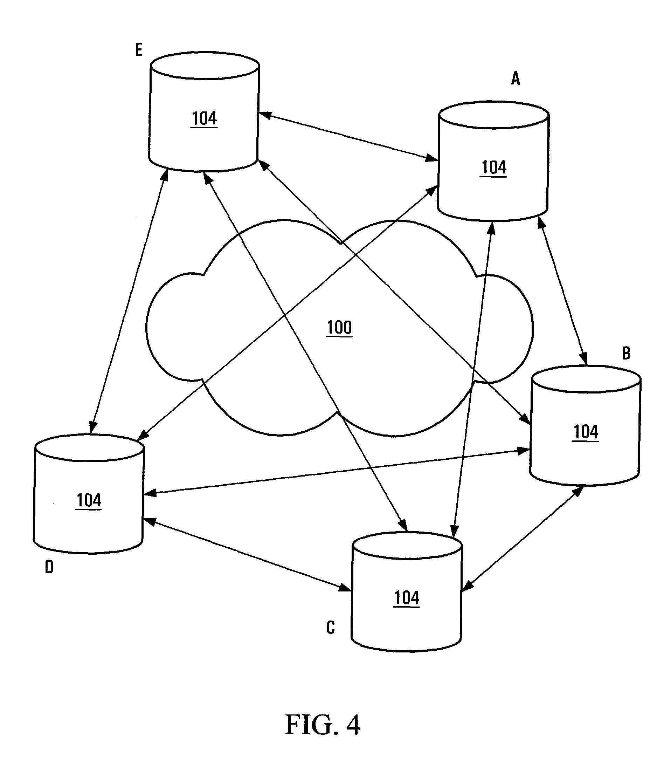

The primary data replication module 300 is responsible for replicating the first metadata portion of the first data collection 104 of each site to the first data collection of all or a subset of the other sites. Fig. 4 depicts the functional operation of the primary replication module 300. The type of operation performed by the primary replication module 300 may be referred to as "online replication", and consists of the complete and substantially immediate sharing of the first metadata portion of the first data collection stored in the databases 104 across predetermined ones of the sites A, B, C, D and E. Thus, for those sites involved in a common design project, the first metadata portion of the first data collection exists at each site as an exact copy of itself.

Online replication by the primary replication module 300 takes place substantially immediately following the detection of a modification to the first metadata portion of the first data collection at one of the sites A, B, C, D and E, independent of the network conditions. This online replication operation may be performed synchronously (at fixed times) or asynchronously (within an interval of a few seconds following the detection of a modification). Another possibility is for the online replication to be performed by a combination of synchronous and asynchronous replication operations.

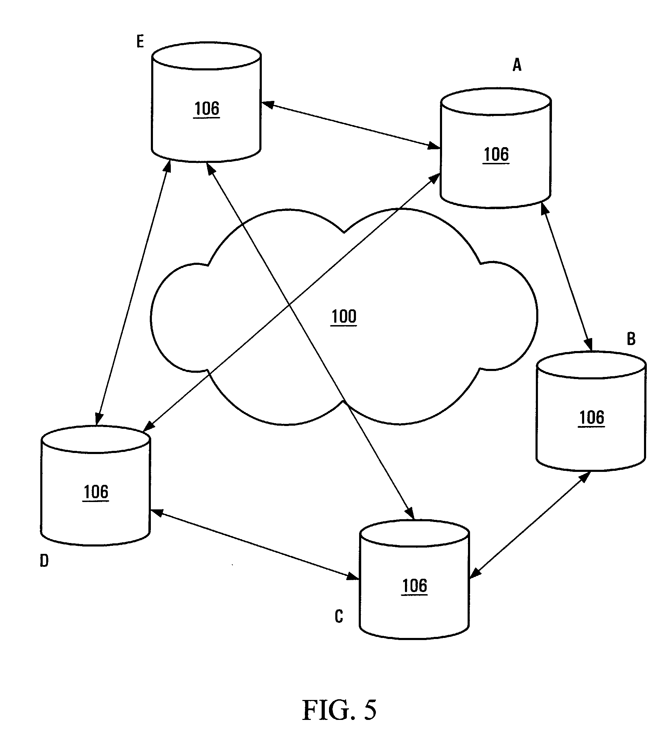

The secondary data replication module 302 is responsible for replicating data from the second data collection of each data storage medium 102 to the second data collection of all or a subset of the other data storage media 102. Fig. 5 depicts the functional operation of the secondary replication module 302. The type of operation performed by the secondary replication module 302 may be referred to as "batch replication", and consists of the selective and delayed sharing of the second data collection stored in the second databases 106 among the sites A, B, C, D and E. The data sharing is delayed because batch replication occurs in dependence of specific network conditions.

As opposed to online replication by the primary replication module 300, batch replication by the secondary replication module 302 does not necessarily occur immediately following a detected modification to the second data collection of a data storage medium 102. Rather, batch replication is performed on the basis of a condition of the data network, such as the average response time, and the secondary replication module 302 switches between a passive and an active mode of operation. In the active mode of operation, batch replication operations are performed by the secondary replication module 302, while in the passive mode of operation, all batch replication operations cease.

Thus, the secondary replication module 302 is responsive to a condition of the network to switch between the passive and active modes of operation. Taking for example the average response time of the network 100, the secondary replication module 302 will only acquire the active mode of operation and perform batch replication operations if the average response time is below a predefined maximal value. If the average response time of the data network 100 is above the predefined maximal value, the secondary replication module 302 will acquire the passive mode of operation.

In a specific example, operation by the secondary replication module 302 may be determined by a level of production activity among the sites A, B, C, D and E, which affects the average response time of the data network 100. Thus, the secondary replication module 302 may only acquire the active mode of operation during periods of non-production, for instance at night. Alternatively, the secondary replication module 302 may switch between the active and passive modes of operation on the basis of the level of productivity within the network 100, such that the batch replication operations occur as soon as possible. In this case, modified data from the second data collection of each data storage medium 102 may be latently replicated between the sites A, B, C, D and E over time.

Note that both the primary and the secondary replication modules 300, 302 of the data management system 200 are implemented in a distributed manner, the server 202 at each one of sites A, B, C, D and E contributing to the implementation of the modules 300, 302, as will be described in further detail below.

Within the data management system 200, the batch replication operation of the secondary data replication module 302 may be implemented indirectly or directly. In the case of indirect batch replication, the data network 100 includes a central server to which each of the servers 202 connect. In a first phase of the batch replication operation, each one of sites A, B, C, D and E push data files toward the central server. In a second phase, each one of sites A, B, C, D and E pulls data files from the central server. In the case of direct batch replication, the central server is eliminated, each one of sites A, B, C, D and E pushing and pulling data files directly to and from a subset of the other sites.

The replication control mechanism 304 includes two data structures, preferably a pointer replication table 306 and a data replication table 308, that allow for the administration of differences in the data shared among the remote sites A, B, C, D and E. Optionally, the replication control mechanism 304 may include an additional data structure, specifically a discrimination table 310.

The pointer replication table 306 of the replication control mechanism 304 is a data management table of the first metadata portion stored in each database 104. At each site, the pointer replication table 306 of the first metadata portion is dynamically updated to shadow the local pointer table of the second metadata portion, storing the same addressing and control data as the local pointer table, as well as any modifications made thereto. As a part of the first metadata portion, the pointer replication table 306 is identically replicated among all of the remote sites involved in a common design project. Thus, while the contents of the local pointer table of the second metadata portion vary from site to site, the pointer replication table 306 of the first data portion is substantially identical among all of the sites involved in the common design of a product. This pointer replication table 306 serves in part to coordinate the replication of the second type of data, notably the data objects, between the remote sites, as will be described in further detail below.

In a preferred embodiment, the primary data replication module 300 is operative to replicate the first metadata portion of each site to all of the other sites that are involved in the common design of a product, on the basis of the contents of the discrimination table 310. Alternatively, the primary data replication module 300 may replicate the first metadata portion of each site to the first data collection of all of the other remote sites within the network 100, regardless of the different design project(s) in which each site is involved. In the latter case, the discrimination table 310 would not be necessary.

When data from the first metadata portion of the first data collection is modified at one of sites A, B, C, D and E, the primary replication module 300 will substantially immediately transmit this modification to a subset or all of the other sites, depending on the contents of the discrimination table 310. This modification will be transmitted by replicating the modified data from the site at which it was modified to the other sites.

Note that by "replicating" is implied either one of direct data replication by a data transfer operation or indirect data replication by a messaging operation, both operations occurring via the data network 100.

The discrimination table 310 serves as a reference point for the purpose of data transfers, defining a relationship between each product being designed within the data network 100 and predetermined ones of the multiple sites A, B, C, D and E. For each entry, the discrimination table 310 maps the identified product to a particular one of the sites A, B, C, D and E. If a product is being designed at more than one site within the network, the discrimination table 310 will include one entry for each site contributing to the design of the particular product. Thus, the discrimination table 310 identifies, for each product being designed, those sites of the network that are involved in the common design project.

The discrimination table 310 is dynamic in nature and is stored in each data storage medium 102, such that it is available to the local server 202 at each one of sites A, B, C, D and E. More specifically, the discrimination table 310 forms a part of the first metadata portion of the first data collection of each first database 104, whereby it is replicated between the sites A, B, C, D and E via the online replication operations performed by the primary replication module 300.

Alternatively, the discrimination table 310 may be static in nature. In this case, rather than form a part of the first metadata portion of each database 104, the discrimination table 310 is stored separately in each data storage medium 102 such that it is not replicated online. Regular updates may be performed on the discrimination table 310 at each site, in order to reflect any changes within the network with regard to the common design projects being worked on by the various sites.

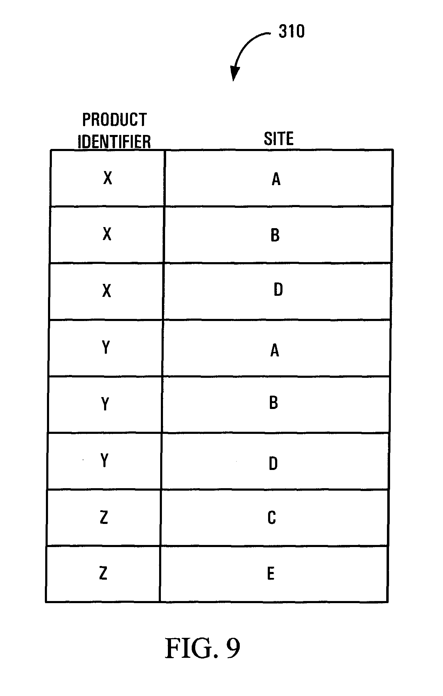

A non-limiting example of the discrimination table 310 is shown in Figure 9, on the basis of the earlier example of the distribution of product design projects among the remote sites A, B, C, D and E. Note that the discrimination table 310 may be structurally implemented by a table or an array, among other possibilities.

In a preferred embodiment, the secondary data replication module is operative to replicate data from the second data collection of each site to the other sites on the basis of the contents of the data replication table 308.

Data from the second data collection of a particular site is shared with other sites of the network, on the basis of the involvement of each site in the design of a particular product. When data of the second data collection is modified at one of sites A, B, C, D and E, the secondary replication module 302 will detect and store this modification. Over time, the secondary replication module 302 will perform a selective transmission of the detected modification to predetermined ones of the other sites. The modification is transmitted by replicating the modified data from the site at which it was modified to a subset or all of the other sites. The determination of the specific sites to which modified data of the second data collection must be replicated is based on the contents of the data replication table 310.

As in the case of the primary replication module 300, the "replicating" operation performed by the secondary data replication module 302 may involve either one of direct data replication by a data transfer operation or indirect data replication by a messaging operation, both operations occurring via the data network 100.

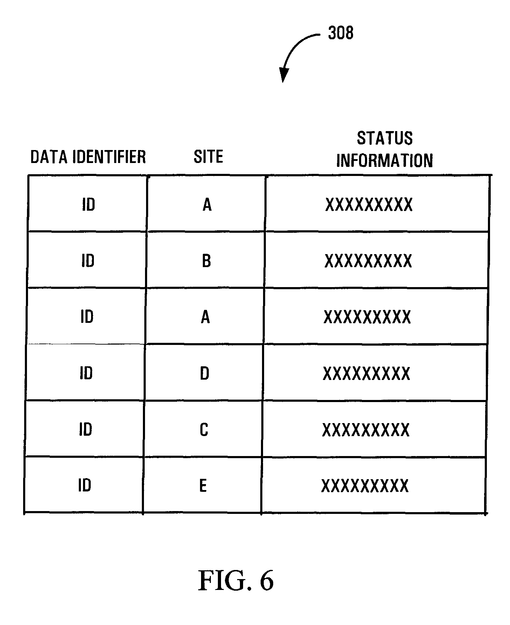

Fig. 6 depicts the data replication table 308. The data replication table 310 is static in nature, and includes at least one entry for each piece of data from the second data collection that is shared between sites A, B, C, D and E. The data is referenced by an identifier, such as a file name or a pointer address, among other possibilities. For each entry, the data replication table 308 maps the identified data to one of sites A, B, C, D and E, as well as to status information indicative of a current status of the respective data. Examples of this status information include whether or not the associated data has been modified, whether or not the associated data is available for replication and whether or not the associated data has been replicated to the mapped site, among other possibilities.

Thus, the data replication table 308 acts as a queue for maintaining a list of modifications made to data of the second data collection. When the secondary replication module 302 is in the active mode of operation, batch replication operations occur on the basis of this list of modifications.

The data replication table 308 allows the secondary replication module 302 to perform batch replication on a need-to-know basis since, for a particular piece of data from the second data collection, there is provided an entry for each site which shares this particular piece of data. For example, if a particular piece of data from the second data collection must be shared between sites A and E only, there will be two entries in the data replication table 308 for this particular piece of data.

The data replication table 308 is stored in each data storage medium 102, such that it is available to the local server 202 at each one of sites A, B, C, D and E. Further, the data replication table 308 forms a part of the first metadata portion of the first data collection of each first database 104, such that it is replicated between the sites A, B, C, D and E via the online replication operations performed by the primary replication module 300. At each one of sites A, B, C, D and E, when a local user modifies data of the second data collection in the local second database 106, the corresponding entry in the data replication table 308 is updated to reflect this modification, for later use by the secondary data replication module 302 when it acquires the active mode of operation, as will be described in further detail below.

Note that, within the first data collection of a first database 104, the data replication table 308 may be structurally implemented by a table or an array, among other possibilities.

In an alternative example of implementation, the data replication table 308 is dynamic in nature. More specifically, the above-described entries are dynamically added to or removed from the data replication table 308, both when modifications are made to data of the second data collection and when batch replication operations occur.

Optionally, the data management system 200 may also include a validator module 312, operative to ensure that data integrity is maintained within the multi-site network 100. More specifically, the validator module 312 ensures that specific data of the second data collection can not be accessed and modified simultaneously at two different remote sites of the network 100.

The validator module 310 performs its validation operation on the basis of validation data stored in both the first and second metadata portions of the first data collection of each data storage medium 102. More specifically, the first metadata portion of the first data collection contains the data replication table 308, and the status information stored in this data replication table 308 serves as validation data for the validator module 312. The second metadata portion of the first data collection includes control data, as described above, which also serves as validation data for the validator module 312. For a particular site of the data network 100, the validator module 312 is capable to determine on the basis of this validation data whether or not specific data in the second data collection is available to a user local to the particular site and, if not, whether the user may still be granted read-only access to the specific data.

The availability of particular data of the second data collection at a particular site may be defined by whether or not the specific data is already in use at another remote site, whether or not the specific data has been modified at another remote site and whether or not the specific data has been updated at the particular site since being modified, among other possibilities.

Alternatively, one of the main operations performed by the validator module 312, notably handling and managing simultaneous attempts to check out the same data object at different sites, can be handled by known conflict management tools built into the data management system 200. In a specific example, the conflict management tool is a built-in feature of a database interface in use by the data management system 200.

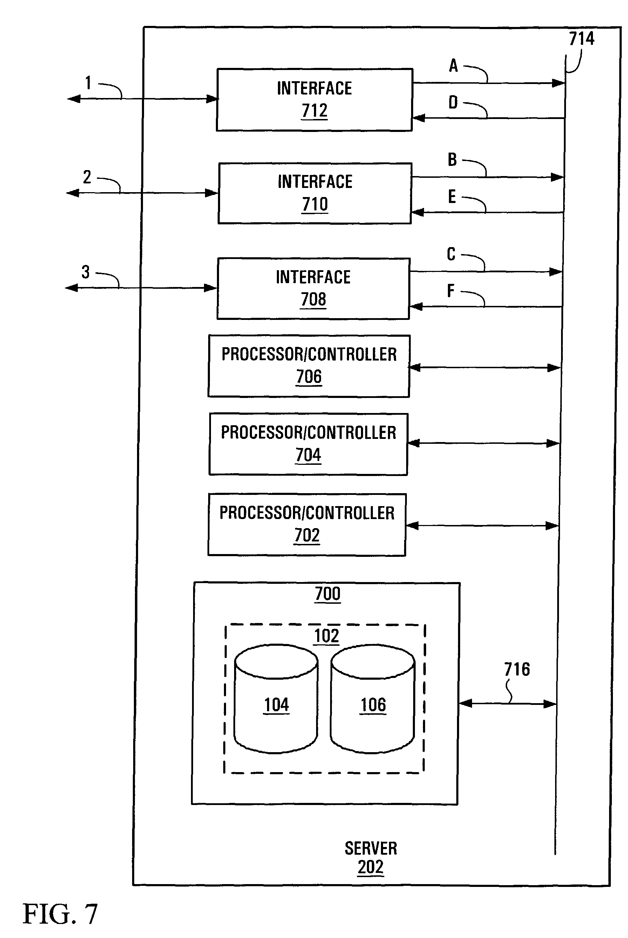

Figure 7 is a structural block diagram of the server 202, which has the responsibility of implementing at least in part the primary and secondary replication modules 300, 302 of the data management system 200. Towards this end, the server 202 is provided with a memory 700, high-speed processor/controllers 702, 704 and 706 (assume for this example that there are three), and a high-speed input/output (I/O) architecture. The I/O architecture consists of the interfaces 708, 710 and 712. An internal system bus 714 interconnects these components, enabling data and control signals to be exchanged between them. In this particular example, the server 202 has 6 ports, identified as port A, port B, port C, port D, port E and port F. These ports connect the server 202 to links 1, 2 and 3, allowing data to be transported to and from various other terminals within the network, such as a different server 202 at a remote site. In the example shown, ports A, B and C are input ports on the links 1, 2 and 3, respectively, while ports D, E and F are the output ports on those same links. The input ports are designed to receive data from their associated links, while the output ports are designed to transmit data over their associated links.

The server 202 is also provided with a link 716 connecting the server 202 to the data storage medium 102, more specifically the first and second databases 104, 106. This communication path allows the server 202 to access the first and second data collections of the data storage medium 102, for performing storage, retrieval and modification operations.

The interfaces 708, 710 and 712 interconnect various input and output ports to the physical links 1, 2 and 3, respectively. Their function is to transmit incoming data packets to the internal system bus 714 for transport to the memory 700 where they can be processed by one of the processors. On the output side, the interfaces are designed to accept data packets from the system bus 714 and impress the necessary electrical signals over the respective physical links so that the signal transmission can take effect. It is not deemed necessary to discuss this standard operation of the interfaces 708, 710 and 712 in more detail because it is well known to those skilled in the art and is not critical to the success of the invention.

The memory 700 contains a program element that controls the operation of the server 202. That program element is comprised of individual instructions that are executed by the controllers, as will be described in detail below. The program element implements at least in part several different functional modules of the data management system 200, notably the primary and secondary data replication modules 300, 302, as well as the validator module 312. The program element is also operative to generate and dynamically update the various data structures of the replication control mechanism 304 of the data management system 200, including the pointer replication table 306, the data replication table 308 and the discrimination table 310.

Besides the program element, the memory also holds the usual routing table that maps the destination addresses of incoming data packets (inherent to the communications exchange protocol) to the server output ports. It is not deemed necessary to discuss the structure of the routing table here because this component is not critical for the success of the invention and also it would be well known to a person skilled in the technological field to which the present invention belongs. The memory also provides random access storage, capable of holding data elements such as data packets that the processors manipulate during the execution of the program element.

In a most preferred embodiment of this invention, the databases 104 and 106 are part of the memory 700 of the server 202, as shown in Figure 7. In this embodiment, the databases 104, 106 are actually on separate storage media, such as a non-volatile medium interconnected through a high speed data bus with the memory 700 so that data from the databases 104, 106 can be quickly accessed and loaded in the random access memory 700 for processing. Alternatively, the collection of data which makes up the databases 104, 106 may be stored remotely on one or a set of physical storage device(s), for instance a disk. In such a case, one of the server's device drivers would be responsible for communicating directly with the peripheral device(s) in order to access the database.

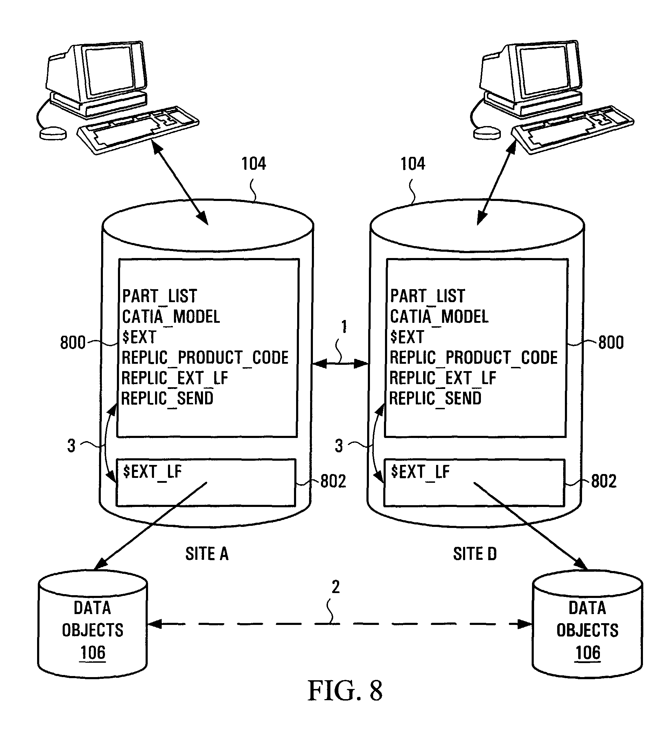

Figure 8 illustrates an example of the operation of the program element stored in the memory 700, and executed by any one of the processor/controllers, that regulates the operation of the server 202, specifically its contribution to the implementation of the data management system 200.

In order to illustrate the operation of the program element, a specific, non-limiting example of a CATIA/VPM™ installation is shown in Figure 8. The first database 104 is an Oracle database, while the second database 106 is a UNIX database of file directories. The UNIX data files stored in the second database 106 are made available through an exported Networked File System (NFS), which is a standard protocol that allows the sharing of file directories across a data network. Note that different types of drawing tool/database interface installations, databases and file system protocols are possible without departing from the scope of the present invention.

In the interest of clarity, only remote sites A and D are shown in Figure 8.

At step 1, the online replication of data from the first metadata portion 800 of the first data collection in database 104 is performed, as described above. Notably, if a user at site A modifies data in the first metadata portion 800 of the first data collection, this modification is replicated, either synchronously or asynchronously but within a few seconds delay, to the first data collection of database 104 at site D. Thus, the first metadata portions 800 are identical at both sites A and D. In this specific example, online replication between the sites A, B, C, D and E of the data network 100 is implemented through built-in features of the Oracle database, notably Oracle Advanced Replication features.

Note that one of the features of Oracle Advanced Replication allows for site-specific replication, such that online replication between the sites may be performed on the basis of the contents of the discrimination table 310.

The first metadata portion 800 of the first data collection includes several data management tables that are standard for a typical CATIA/VPM™ installation, including PART_LIST, CATIA_MODEL and $EXT. These tables contain standard metadata or descriptive data relating to virtual product models. More specifically, the PART_LIST table provides a list of parts or elements, sorted by name, which may be used in the design of a product or part model. The CATIA_MODEL table defines a three-dimensional model for each part or element listed in the PART_LIST table. The $EXT table defines the various links that exist between different parts or elements, for each product or part model data file.

The second metadata portion 802 of the first data collection also includes certain tables standard to a typical CATIA/VPM™ installation, including a local pointer table $EXT_LF. These tables contain data that may differ from one site to the next, and as such is not replicated between sites A and D. In particular, the $EXT_LF table contains file pointers which address data objects stored in the local second database 106.

The fact that the $EXT_LF table is not replicated among the sites allows users at a particular site to continue to have access to a local version of a data file even when a modification has been made to the same data file somewhere else in the network. However, the validator module 312 of the data management system 200 ensures that this access becomes read-only.

The second data collection contained in the second database 106 consists of data objects, in this example part model or product model data files, storing the virtual product models created and modified by the users at each remote site. At each particular site, the respective second database 106 only stores those data files that relate to products being developed at the particular site.

Specific to the present invention, the first metadata portion 800 of the first data collection includes certain additional tables, notably REPLIC_EXT_LF, REPLIC_PRODUCT_CODE and REPLIC_SEND. These additional tables allow for differences in the data files to exist and be maintained at remote sites.

The REPLIC_EXT_LF table, also referred to as a shadow table, implements the pointer replication table 306 described above. The REPLIC_EXT_LF table is a copy of the pointer table $EXT_LF of the second portion 802 of the first data collection. Although the $EXT_LF table is not replicated online between the sites A and D, a copy of this table is replicated online by means of the shadow table. In other words, the pointers themselves are not replicated between the sites A and D, but modifications to these pointers are replicated in the shadow table. Thus, the data pointers in the local $EXT_LF table at each remote site are updated on the basis of the contents of the REPLIC_EXT_LF table, once data files have been replicated between sites during batch replication at night.

The REPLIC_PRODUCT_CODE table implements the discrimination table 310 described above, which is an optional feature of the data management system 200. In this example, the REPLIC_PRODUCT_CODE table maps one or more sites to each product under design within the network, where the products are represented by predetermined product codes. More specifically, the REPLIC_PRODUCT_CODE table includes at least one entry for each product. When more than one site is contributing to the design of a product, the REPLIC_PRODUCT_CODE table includes an entry for each contributing site.

The REPLIC_SEND table implements the data replication table 308 described above and serves to manage differences in the data files among the remote sites. In this example, the REPLIC_SEND table includes an entry for each file pointer in the $EXT_LF table, and for each site to which the data file addressed by the file pointer must be replicated. The REPLIC_SEND may also include, for each entry, status information, for example in the form of a TRANSFERRED data field. The TRANSFERRED data field identifies whether the corresponding data file has been transferred to the respective site. Thus, the REPLIC_SEND table determines which data files must be transferred between the remote sites during a given batch replication process.

As described above, the validator module 312 of the data management system 200 is operative to determine at each site whether or not a specific data file is available to a local user, on the basis of validation data stored in the first and second metadata portions 800, 802.

In this specific example, the information stored in the TRANSFERRED data field of the REPLIC_SEND table acts as validation data for the validator module 312. Furthermore, the CATIA_MODEL table of the first metadata portion 800 contains information on the current ownership of each virtual product model data file, which also serves as validation data for the validator module 312. In particular, the CATIA_MODEL table includes, for each data file of the second database 106, a CHECK_OUT data field that either contains an identifier of the user owning the data file or the value "NO" if the data file is not owned by any user.

Finally, the $EXT_LF table also contains validation data, in the form of two data fields associated with each file pointer, notably X_MODIFY_SITE and X_MODIFY_FLAG. The X_MODIFY_SITE field identifies the site on which the last modification to the associated data file was performed, while the X_MODIFY_FLAG field identifies whether or not the associated data file has been modified.

Alternatively, the conflict management performed by the validator module 312 in between the batch replication operations may be implemented by a built-in feature of the Oracle database interface, notably the Oracle Replication Conflict Resolution. This feature of Oracle has been well documented and is well known to those skilled in the art, and as such will not be discussed in further detail.

At step 2, the batch replication of data from the second data collection in database 106 is performed, as described above. In this example, assume that batch replication occurs only during periods of non-production, notably at night. Thus, modifications made during the day to the data files of the second database 106 are stored by the program element in the REPLIC_SEND table, for use during the batch replication operations at night.

In this specific example, batch replication is implemented by a series of inter-dependent system scripts managed by Oracle tables. These system scripts are executed using a file transfer daemon. During batch replication at night, the Oracle scripts query the REPLIC_SEND table in order to determine which data files of the second data collection was modified during the day. For a particular site, the Oracle scripts will again query the REPLIC_SEND table in order to determine which modified data files are available at the particular site for batch replication, as well as to determine which ones of the other sites the available modified data files are to be replicated to.

In order to be able to perform batch replication at night, the program element generates the REPLIC_SEND table and the REPLIC_EXT_LF table at step 3. Since these tables form part of the first portion 800 of the first data collection, they are replicated online at 1 and exist at each site in substantially identical form.

During the day, the program element executes triggers in response to modifications to the data objects of the second database 106, in order to generate and update both the data replication table 308 (REPLIC_SEND table) and the pointer replication table 306 (REPLIC_EXT_LF). In a database, a trigger is an action that causes a procedure to be carried out automatically when a user attempts to modify data. A trigger can instruct the database system to take a specific action, depending on the particular change attempted. The functionality and implementation of triggers are well known to those skilled in the art, and as such will not be described in further detail.

The program element may also contribute to the implementation of the validator module 312, described above as an optional feature of the data management system 200. More specifically, each time a user attempts to access or modify a data object in the database 106 of a particular site, the program element is operative to first validate this action on the basis of the CHECK_OUT field in the shared CATIA_MODEL table, the TRANSFERRED data field in the shared REPLIC_SEND table and the X_MODIFY_SITE and X_MODIFY_FLAG data fields in the local $EXT_LF table. If the data object that the user is attempting to access has been checked out by another user, the user will be denied access to the data object. Alternatively, the user may be allowed read-only access to the local data object. Further, if the data object that the user is attempting to access has been modified at another site, and has not yet been transferred to the particular site, the user will either be denied access to the data object or allowed read-only access to the data object.

In a specific scenario, assume that a new product model is created on site A. The creation of a new model involves the insertion of data into the Oracle tables of the first database 102, as well as the creation of a new data file in the UNIX directory of the second database 104, which is referenced in the pointer table ($EXT_LF). The corresponding X_MODIFY_FLAG field in the $EXT_LF table is set to YES, in order to reflect that the associated data file has been modified (i.e. newly created). Triggers will be called in order to replicate the new entry from the pointer table $EXT_LF to the shadow table REPLIC_EXT_LF, as well as to create a new entry in the data replication table REPLIC_SEND. Assuming that sites A and D are both developing the same product, the new entry in the data replication table will indicate that the new data file must be replicated to site D.

All tables of the first metadata portion 800 of the first database 104 will be replicated substantially immediately to all of the other sites of the network 100, via online replication. At site D, a trigger will be called in order to create a new entry in the local pointer table $EXT_LF, on the basis of the updated entry in the shared shadow table REPLIC_EXT_LF. This new entry in the local pointer table $EXT_LF of site D will address a temporary data file, since the new data file has not yet been replicated from site A to site D.

During the following batch replication operation at night, the new data file will be transferred to site D. Once the new data file has been transferred to site D, an update of the new pointer in the $EXT_LF table at site D will be performed to point towards the newly replicated data file.

Following the update of the new pointer in the $EXT_LF table at site D, the relevant entry in the REPLIC _SEND table at site A will also be updated. More specifically, the TRANSFERRED data field of the relevant entry in the REPLIC_SEND table at site A will be updated to reflect that the corresponding data file has been transferred to the site D. Also, the corresponding X_MODIFY_FLAG field in the $EXT_LF table at site A will be reset to NO.

In another possible scenario, an existing data file is modified or updated by a user at site A. In this case, the same processes will be executed as in the above scenario of a newly created data file. However, instead of a temporary model file being created at site D, the corresponding pointer at site D will continue to point to the previous version of the data file (old file) until the updated data file has been transferred to site D, at which point the pointer at site D will be updated to point to the modified data file.

In a variant embodiment of the present invention, the validator module 312 of the data management system 200 includes an authentication module. This authentication module is operative to implement a security architecture for the multi-site network 100, including the definition of roles, privileges and access rights for the system users at each one of sites A, B, C, D and E. In this case, another component stored in the memory 700 of the server 202 is an authentication table, which maps all of the registered users to a role. A role consists of a set of privileges or actions that are permitted and thus granted to a user.

The authentication table is used to authenticate and grant privileges to clients logging on to the server 202. Each user is associated with a unique user profile that specifies permissible operations and accesses, in order to limit access to the shared first and second data collections. Examples of such permissible operations include the creation of data files (new models), the creation of parts, the update of data files, the check-out of data files and the read-only access to a checked-out data file, among other possibilities. Specifically, the authentication table is used to identify between users with different user privileges, for instance clients that are permitted to create models but not check out models and clients that are permitted to check out models but not create models.

Accordingly, the program element described above may also contribute to the implementation of this authentication module. More specifically, each time a user attempts to access or modify data in either one of the first and second databases 104, 106 of a particular site, the program element is operative to first authenticate the user, as well as to grant and deny privileges to the user, on the basis of the contents of the authentication table.

In another variant embodiment of the present invention, the above-described data replication table 308 of the replication control mechanism 304 is replaced by a set of queues. The set of queues includes one queue per remote site of the data network, where each queue stores a list of modified data objects that are pertinent to the respective site, and that therefore must be replicated by the secondary data replication module 302 to the respective site.

As in the case of the data replication table 308, the queues form a part of the first metadata portion of the first data collection of each first database 104. Thus, the queues are replicated between the sites A, B, C, D and E via the online replication operations performed by the primary data replication module 300.

When a user at a particular site modifies a data object of the respective local second database 106, the program element implementing the data management system 200 updates the relevant queues (i.e. those associated with the concerned remote sites) in the first metadata portion of the respective local data storage medium to reflect this modification. The updated queues of the first metadata portion at the particular site are identically replicated to predetermined ones of the other remote sites by the primary data 300, for later use by the secondary data replication module 302 when it acquires the active mode of operation. Thus, the secondary data replication module 302 performs batch replication operations on the basis of the contents of the queues, in order to replicate data objects between the remote sites of the network.

It will be apparent to one of ordinary skill in the art that the embodiments as described above may be implemented in many different embodiments of software, and hardware in the entities illustrated in the figures. The actual software code or specialized control hardware used to implement the present invention is not limiting of the present invention. Thus, the operation and behavior of the embodiments were described without specific reference to the specific software code or specialized hardware components, it being understood that a person of ordinary skill in the art would be able to design software and control hardware to implement the embodiments based on the description herein.

The foregoing description of the present invention provides illustration and description, but is not intended to be exhaustive or to limit the invention to the precise form disclosed. Modifications and variations are possible consistent with the above teachings or may be acquired from practice of the invention. The scope of the invention is defined by the claims and their equivalents.

## Claims

1. A data management system for sharing data between remote sites of a data network, said data management system comprising:
a) a plurality of data storage media, each data storage medium being located at a respective site of the data network and being operative to store first and second data collections;
b) a primary data replication module operative to replicate data from at least a portion of the first data collection of each data storage medium to the same portion of the first data collection of predetermined ones of the other data storage media;
c) a replication control mechanism including a data structure, said data structure being stored in the first data collection of each data storage medium whereby data from said data structure is replicated by said primary data replication module from each data storage media to the respective predetermined other data storage media, said data structure containing data representative of modifications made to the second data collection of each data storage medium;
d) a secondary data replication module operative to replicate data from the second data collection of each data storage medium to the second data collection of at least a subset of the other data storage media on the basis of the contents of said data structure.

2. A data management system as defined in claim 1, wherein, at each site of the data network, said data structure is dynamically updated to reflect modifications made to the second data collection of the respective local data storage medium.

3. A data management system as defined in claims 1 or 2, wherein said first data collection includes metadata and said second data collection includes data objects, said metadata defining first and second metadata portions.

4. A data management system as defined in claim 3, wherein said primary replication module is operative to ensure that the first metadata portion of each data storage medium is substantially identical to the first metadata portion of the respective predetermined other data storage media.

5. A data management system as defined in claims 3 or 4, wherein, at each site, the second metadata portion includes a local pointer table storing at least one pointer indicative of the address of a location in the respective local data storage medium, the location containing a specific data object, the address being in a form allowing a machine to access the location and import the data object from the location.

6. A data management system as defined in any one of claims 3-5, wherein, at each site, said data structure is dynamically updated to contain a copy of the contents of the respective local pointer table of the second metadata portion.

7. A data management system as defined in any one of the preceding claims, wherein said data structure is a pointer replication table.

8. A data management system as defined in any one of claims 3-7, wherein said data structure is a first data structure, said replication control mechanism including a second data structure, said second data structure being stored in the first metadata portion of each data storage medium whereby data from said second data structure is replicated by said primary data replication module from each data storage media to the respective predetermined other data storage media, said second data structure mapping the data objects of each data storage medium to predetermined ones of the remote sites of the data network.

9. A data management system as defined in claim 8, wherein said second data structure includes at least one entry for each data object, each entry mapping the respective data object to a particular one of the remote sites of the data network.

10. A data management system as defined in claim 9, wherein each entry in said second data structure further includes status information indicative of a current status of the associated data object with respect to the particular site.

11. A data management system as defined in any one of claims 8-10, wherein said second data structure is a data replication table.

12. A data management system as defined in any one or claims 3-7, wherein said data structure is a first data structure, said replication control mechanism including a second data structure, said second data structure being stored in the first metadata portion of each data storage medium whereby data from said second data structure is replicated by said primary data replication module from each data storage media to the respective predetermined other data storage media, said second data structure including a set of queues, each queue being associated with a particular site of the data network and storing a list of modified data objects for replication by the secondary data replication module to the particular site.

13. A data management system as defined in any one of claims 3-12, wherein the data network includes at each site an interface associated with the respective data storage medium through which a user local to the site may access the respective data storage medium and modify the metadata and data objects stored in the respective data storage medium, said primary data replication module being operative to:
a) continuously monitor the first metadata portion of each data storage medium;
b) detect a modification to the first metadata portion of the metadata of a particular data storage medium;
c) automatically replicate the detected modification to the first metadata portion of each one of the predetermined other data storage media.

14. A data management system as defined in claim 13, wherein the automatic replication performed by said primary replication module at step c is realized by synchronous replication operations.

15. A data management system as defined in claim 13, wherein the automatic replication performed by said primary replication module at step c is realized by asynchronous replication operations.

16. A data management system as defined in claim 13, wherein the automatic replication performed by said primary replication module at step c is realized by a combination of synchronous and asynchronous replication operations.

17. A data management system as defined in any one of claims 3-16, wherein said secondary data replication module is capable to acquire either one of a passive and an active mode of operation, said secondary data replication module switching between the passive and active modes of operation on the basis of a certain condition of the data network.

18. A data management system as defined in claim 17, wherein said certain condition of the data network is the average response time of the data network.

19. A data management system as defined in claim 18, wherein if the average response time of the data network is lower than a predefined maximal value, said secondary replication module acquires the active mode of operation.

20. A data management system as defined in claim 18, wherein if the average response time of the data network is greater than a predefined maximal value, said secondary replication module acquires the passive mode of operation.

21. A data management system as defined in claim 18, wherein the average response time of the data network is dependent on a level of production activity, said secondary replication module acquiring the active mode of operation during periods of non-production.

22. A data management system as defined in any one of claims 3-21, wherein the data shared between the remote sites of the data network relates to at least one product design project, said replication control mechanism further including a third data structure, said third data structure being stored in the first metadata portion of each data storage medium whereby data from said third data structure is replicated by said primary data replication module from each data storage media to the respective predetermined other data storage media, said third data structure mapping each product being designed within the data network to at least a subset of the remote sites of the data network.

23. A data management system as defined in claim 22, wherein said primary replication module replicates the first metadata portion of each data storage medium to predetermined ones of the other data storage media on the basis of the contents of said third data structure.

24. A data management system as defined in claims 22 or 23, wherein said third data structure is a discrimination table.

25. A data management system as defined in any one of claims 3-24, wherein said first metadata portion including part lists, design tools, data management tables and part links.

26. A data management system as defined in any one of claims 3-25, wherein said second metadata portion includes addressing and control data for said data objects.

27. A data management system as defined in any one of claims 3-26, wherein the data objects include part model data files, product model data files and specification documents.

28. A data management system as defined in any one of claims 17-21, wherein said data management system further includes a validator module, said validator module operative to perform conflict management when said secondary data replication module is in the passive mode of operation.

29. A data management system as defined in claim 28, wherein said validator module is operative to determine whether, at a particular site of the data network, a data object of the respective local data storage medium is available to a user local to the particular site.

30. A data management system as defined in claims 28 or 29, wherein both the first and second metadata portions of each data storage medium include validation data, said validator module operative to determine whether a data object of a particular data storage medium is available to a user local to the respective site on the basis of the validation data of the particular data storage medium.

31. A data management system as defined in any one of claims 28-30, wherein said validator module includes an authentication module operative to validate the system users, said authentication module defining a set of access rights for each system user at each site of the data network.

32. A data management system as defined in claim 31, wherein said authentication module includes an authentication table mapping each system user to a set of permissible operations.

33. A data management system as defined in claim 32, wherein said permissible operations are selected from the group consisting of creating a data file, creating a part, updating a data file, checking out a data file and acquiring read-only access to a checked-out data file.

34. A method for sharing data between remote sites of a data network, each site having a data storage medium capable to store first and second data collections, said method comprising:
a) replicating data from at least a portion of the first data collection of a particular data storage medium to the same portion of the first data collection of predetermined ones of the other data storage media;
b) generating a data structure containing data representative of modifications made to the second data collection of each data storage medium;
c) storing the data structure in the first data collection of each data storage media, whereby data from said data structure is replicated by a primary data replication module from each data storage media to the respective predetermined other data storage media;
d) selectively replicating data from the second data collection of a particular data storage medium to the second data collection of at least a subset of the other data storage media on the basis of the contents of said data structure.

35. A computer-readable medium having recorded thereon a data structure for managing shared data between multiple, remote sites of a data network, each site having a data storage medium for storing first and second data collections, a major portion of the first data collection of each data storage medium being replicated to the same major portion of the first data collection of predetermined ones of the other data storage media, said data structure being stored in the first data collection of each data storage medium whereby data from said data structure is replicated from each data storage media to the respective predetermined other data storage media, said data structure containing data representative of modifications made to the second data collection of each data storage medium.

36. A data structure as defined in claim 35, wherein said data structure is a pointer replication table.

37. A computer-readable medium having recorded thereon a data structure for managing shared data between multiple, remote sites of a data network, each site having a data storage medium for storing first and second data collections, a major portion of the first data collection of each data storage medium being replicated to the same major portion of the first data collection of predetermined ones of the other data storage media, said data structure being stored in the first data collection of each data storage medium whereby data from said data structure is replicated from each data storage media to the respective predetermined other data storage media, said data structure mapping data from the second data collection of each data storage medium to predetermined ones of the remote sites of the data network.

38. A data structure as defined in claim 37, wherein said data structure further maps data from the second data collection of each data storage medium to status information, the status information indicative of a current status of the data.

39. A data structure as defined in claim 38, wherein said data structure is a data replication table.

40. A data management system for sharing data between remote sites of a data network, each site having a data storage medium storing metadata and data objects, the metadata defining first and second metadata portions, the second metadata portion including a local pointer table storing at least one pointer indicative of the address of a location in the respective local data storage medium, the location containing a specific data object, said data management system comprising:
a) a primary data replication module operative to replicate data from the first metadata portion of each data storage medium to the first metadata portion of predetermined ones of the other data storage media;
b) a data structure stored in the first metadata portion of each data storage medium whereby data from said data structure is replicated by said primary data replication module from each data storage media to the respective predetermined other data storage media, at each site said data structure being dynamically updated to contain a copy of the contents of the local pointer table of the second metadata portion of the local data storage medium;
c) a secondary data replication module operative to replicate data from the second data collection of each data storage medium to the second data collection of at least a subset of the other data storage media on the basis of the contents of said data structure.

41. A data management system as defined in claim 40, wherein said data structure is a pointer replication table.
